# FASCICULE DE BREVET EUROPEEN

(11) **EP 3 016 817 B1**
(45) Date de publication et mention de la délivrance du brevet: **10.04.2019**
(21) Numéro de dépôt: 14733127.6
(22) Date de dépôt: 19.06.2014
(51) Int. Cl.: B60L 3/04, B60L 11/18, B60L 11/00, B61C 17/06, B60M 7/00

(54) **VEHICULE ELECTRIQUE ET INSTALLATION DE TRANSPORT ASSOCIEE**
ELEKTROFAHRZEUG UND VERBUNDENE TRANSPORTEINRICHTUNG
ELECTRIC VEHICLE AND ASSOCIATED TRANSPORT INSTALLATION

(30) Priorité: 05.07.2013 FR 1356638
(43) Date de publication de la demande: 11.05.2016
(73) Titulaire: Blue Solutions, 29500 Ergué Gabéric (FR)
(72) Inventeur: JESTIN, Jean-Jacques, F-29170 Fouesnant (FR); SELLIN, Christian, F-29900 Concarneau (FR); LE PAVEN, Yvon, F-29500 Ergué Gaberic (FR)
(74) Mandataire: Regimbeau
(86) Numéro de dépôt international: PCT/EP2014/062926
(87) Numéro de publication internationale: WO 2015/000713

(56) Documents cités:
- EP-A2- 2 574 493
- WO-A2-2011/139680
- WO-A2-2012/154990
- US-A1- 2008 277 173
- US-A1- 2012 038 215

## Description

L'invention concerne une installation de transport public, comprenant notamment un véhicule destiné à transporter des passagers et des stations auxquelles est censé s'arrêter ce véhicule, ainsi que le véhicule de ladite installation.

Le document US 2008/0277173A1 décrit un véhicule électrique selon le préambule de la revendication 1.

Le document US 2012/0038215 A1 décrit un véhicule électrique comportant une supercapacité et un dispositif de stockage d'energie, pouvant être une batterie ou une supercapacité, reliés en série pour alimenter un moteur, la supercapacité étant relieé par l'intermédiaire d'une diode à une autre batterie permettant de recharger la supercapacité et le dispositif.

Le document WO 2011/139680 décrit un véhicule électrique comportant un source d'énergie de propulsion telle qu'une batterie, une supercapacité ou autre.

On connaît dans l'état de la technique une installation comprenant un véhicule de type tramway, comprenant un moteur électrique alimenté par des supercondensateurs, le véhicule s'arrêtant régulièrement dans des stations prévues à cet effet pour prendre ou déposer des passagers, les supercondensateurs étant rechargés lors de cet arrêt grâce à une connexion du véhicule avec la station. Les supercondensateurs pouvant être rechargés très rapidement, la durée de l'arrêt du véhicule pour prendre ou déposer des passagers suffit généralement à recharger les supercondensateurs se trouvant dans le véhicule pour que ce dernier puisse se rendre à l'arrêt suivant se trouvant sur son trajet.

Une telle installation est très avantageuse puisqu'elle permet de concevoir un véhicule de transport en commun électrique mais qui peut circuler en continu toute la journée sans avoir besoin d'être rechargé de nombreuses heures au cours de celle-ci.

Toutefois, une installation de ce type nécessite de construire des stations d'arrêt et de charge reliées au réseau électrique et relativement imposantes, notamment lorsque ces stations comprennent des moyens de stockage d'énergie électrique tels que des supercondensateurs qui permettent de soulager le réseau électrique. Ces stations sont donc généralement encombrantes ce qui les rend peu esthétiques. Elles ne peuvent de ce fait pas être installées partout, ce qui est susceptible de créer des contraintes relativement au parcours des véhicules. Une telle installation peut donc ne pas être adaptée à tous les cas.

La présente invention a pour but de fournir un véhicule électrique et une installation de transport public qui réponde à cette problématique, à savoir notamment de permettre la mise à disposition d'un service de transport en commun pour lequel les contraintes d'implantation sont peu importantes.

A cet effet, l'invention a tout d'abord pour objet un véhicule électrique selon la revendication 1.

On rappellera que la batterie et le supercondensateur sont des moyens de stockage d'énergie constitués chacun de deux électrodes et d'un électrolyte permettant la circulation des ions et électrons entre les deux électrodes. Mais leur composition, leur fonctionnement et leurs applications sont assez différents.

Les électrodes d'un supercondensateur sont fabriquées à base de charbon actif et sont généralement (mais pas nécessairement) identiques. Elles permettent l'accumulation des ions ou électrons respectivement sur chacune de ses électrodes et le stockage d'énergie de façon capacitive. Les batteries sont conçues sur la base d'une électrode négative (anode) métallique, notamment en lithium, et d'une électrode positive (cathode), notamment formée par un composite plastique permettant d'intercaler les ions métalliques. Il se produit une réaction d'oxydation au niveau de l'anode et une autre de réduction au niveau de la cathode. Le type de stockage que permet la batterie est un stockage faradique. La batterie utilisée préférentiellement dans l'invention est une batterie de type lithium métal-polymère.

Un supercondensateur présente une grande densité de puissance ce qui signifie qu'on peut le charger très rapidement, à l'aide de courants forts, et que l'énergie qu'il contient peut être restituée rapidement. Une batterie comprend en revanche une meilleure densité d'énergie à savoir qu'elle peut conserver l'énergie bien plus longtemps qu'un supercondensateur, et en stocker une bien plus grande quantité. Même si une charge de batterie est donc beaucoup plus lente qu'une charge de supercondensateur, une batterie permet en général de parcourir une distance bien plus grande.

Ainsi, grâce à l'invention, le véhicule peut fonctionner en régime « recharge rapide en station » comme dans l'état de la technique, du fait des supercondensateurs qu'il contient, ainsi que de façon indépendante des stations grâce à sa batterie embarquée. La batterie permet en effet au véhicule de parcourir un trajet bien supérieur entre deux charges à la longueur du trajet permis par les supercondensateurs seuls, notamment plusieurs dizaines de kilomètres. L'énergie stockée dans la batterie est également disponible pendant plusieurs dizaines d'heures.

Grâce à cette association, on peut donc adapter les moyens de stockage d'énergie par le biais desquels l'énergie est fournie au moteur aux circonstances. Lorsque l'on se trouve dans des zones dans lesquelles on dispose de l'espace nécessaire pour l'installation des stations et/ou que l'on considère que les stations ne dénaturent pas l'ensemble architectural, par exemple en zone péri-urbaine, on installe des stations et le véhicule électrique alimente le moteur à l'aide des supercondensateurs rechargés régulièrement en station. En revanche, lorsque la zone choisie pour la circulation du véhicule ne permet pas l'installation de stations, pour des raisons d'encombrement ou de sauvegarde du paysage urbain, par exemple dans un centre-ville historique, on n'installe pas de stations de charge et le véhicule circule à l'aide de sa batterie sur cette portion de son trajet.

Cette diversité de moyens de stockage d'énergie permet également de faire face à différents imprévus, comme les embouteillages qui augmentent le temps de trajet du véhicule entre deux stations ou des travaux situés sur le trajet habituel du véhicule qui obligent à dévier le trajet du véhicule d'une station pendant une période donnée. On évite également ainsi de surdimensionner les supercondensateurs, ce qui était effectué dans l'état de la technique pour prendre en compte quelques cas dans lesquels de telles perturbations se produisaient.

Le fait de relier la batterie et les supercondensateurs chacun directement au moteur électrique permet un meilleur rendement du véhicule. On évite en effet une étape de charge/décharge, que l'on devrait effectuer par exemple si la batterie était reliée en série des supercondensateurs et qu'elle permettait uniquement l'alimentation des supercondensateurs en énergie et/ou vice-versa, une telle étape étant susceptible de générer une perte d'énergie.

Le fait que l'on ne puisse pas alimenter le moteur à la fois à l'aide des supercondensateurs et de la batterie permet de mieux contrôler les dépenses d'énergie du véhicule, en évitant de fournir à ce dernier une puissance disponible importante qui ne serait pas réellement nécessaire au bon fonctionnement du véhicule.

On notera que les moyens d'interconnexion disposés entre les moyens de stockage et le moteur peuvent bien entendu être placés dans le module comprenant les moyens de stockage d'énergie, un tel module comportant également de l'électronique embarquée. Cela vaut également pour d'autres éléments décrits ici.

Le véhicule peut également comprendre d'autres caractéristiques optionnelles qui sont évoquées ci-dessous.

Le véhicule comprend :
- des premiers moyens de connexion, aptes à relier le premier module de stockage à des moyens de connexion complémentaires, situés à l'extérieur du véhicule,
- des deuxièmes moyens de connexion, distincts des premiers, aptes à relier le deuxième module de stockage à d'autres moyens de connexion complémentaires, situés à l'extérieur du véhicule.

Les supercondensateurs (respectivement les batteries) sont ainsi chargé(e)s chacun(e) de façon indépendante, ce qui garantit la mise en place d'un type de charge adaptée aux différents moyens de stockage d'énergie, et ainsi une utilisation optimale de l'énergie transférée au véhicule. Les premiers moyens de connexion peuvent comprendre un bras de connexion, notamment télescopique, apte à s'étendre en saillie du véhicule et comprenant un connecteur à son extrémité destiné à être connecté à un connecteur complémentaire, notamment d'une station de charge. Un tel bras est de préférence situé en partie haute du véhicule de façon à être non accessible à un utilisateur. Cette connexion est en effet destinée à être effectuée de façon automatisée. D'autres types de moyens de connexion peuvent toutefois également être utilisés, par exemple des moyens de type pantographe.

Les deuxièmes moyens de connexion peuvent comprendre un connecteur, de type mâle ou préférentiellement femelle, situé dans une trappe d'accès verrouillable du véhicule. Cette trappe est généralement située à une hauteur accessible à l'utilisateur, qui doit lui-même connecter le connecteur au connecteur complémentaire situé éventuellement dans une station de charge.

Le véhicule peut également comprendre au moins un convertisseur courant continu/continu (DC/DC) et/ou courant alternatif/courant continu (AC/DC) interposé entre les premiers et/ou deuxièmes moyens de connexion et le module de stockage correspondant. De tels moyens permettent d'adapter l'énergie reçue depuis l'extérieur, notamment d'une source d'énergie en courant continu tel que des moyens de stockage d'énergie, ou d'une source en courant alternatif tel qu'un réseau de distribution urbain, aux besoins spécifiques des moyens de stockage concernés.

Entre la batterie et les moyens de connexion pour la charge de ladite batterie, le véhicule comprend de préférence un chargeur qui forme à la fois un convertisseur de courant continu et un convertisseur courant alternatif - courant continu. On peut ainsi recharger la batterie, soit à partir d'un réseau électrique urbain, soit par le biais de bornes de charge comportant des moyens de stockage d'énergie intégrées, et ce sans devoir spécifiquement adapter ces bornes de charge audit véhicule. Le véhicule peut ainsi être compatible avec de nombreuses installations de charge.

Les moyens d'interconnexion comprennent un interrupteur comprenant une pluralité de positions, l'une des positions permettant notamment de relier électriquement le premier module de stockage au moteur alors qu'une autre des positions permet de relier électriquement le deuxième module de stockage au moteur. On notera que l'interrupteur comprend une troisième position, dite d'arrêt, dans laquelle aucun des modules de stockage d'énergie n'est relié au moteur.

Le véhicule peut également comprendre des moyens de commande des moyens d'interconnexion, aptes à commander les moyens d'interconnexion en fonction de l'un ou plusieurs des paramètres suivants :
- paramètres liés au fonctionnement du premier et/ou du deuxième module de stockage d'énergie, notamment état de charge,
- paramètres liés au fonctionnement du véhicule, notamment vitesse du véhicule ou état du moteur,
- signal en provenance d'une interface utilisateur.

Les moyens de commande des moyens d'interconnexion sont aptes à communiquer avec l'un ou plusieurs des éléments suivants :
- des moyens de surveillance du premier module de stockage,
- des moyens de surveillance du deuxième module de stockage,
- des moyens de surveillance des autres organes du véhicule, notamment bus CAN du véhicule.

Les moyens de surveillance permettent d'obtenir des paramètres liés aux modules de stockage (état de charge, défaut de fonctionnement) et le bus CAN rassemble toutes les informations en provenance des organes du véhicule (en particulier mesurées au niveau de ces organes à l'aide de capteurs). Il permet notamment d'obtenir des informations sur l'état du moteur, la vitesse du véhicule, ou les commandes passées par le biais de l'interface utilisateur.

Les moyens d'interconnexion peuvent donc être notamment commandés en fonction du niveau de charge du ou des supercondensateurs. Si le niveau de charge est inférieur à une valeur prédéterminée, les moyens d'interconnexion sont commandés de sorte que la position des moyens d'interconnexion permette de relier la batterie au moteur. Au contraire, on peut également prévoir que lorsque le niveau de charge du ou des supercondensateurs excède une deuxième valeur prédéterminée, la position des moyens d'interconnexion est commandée pour relier électriquement les supercondensateurs au moteur. Ce mode de commande est particulièrement adapté puisque les supercondensateurs ne conservent pas l'énergie emmagasinée très longtemps. On consomme donc d'abord dès que possible l'énergie obtenue par le biais du ou des supercondensateurs, et lorsque ceux-ci ne permettent plus d'alimenter le moteur de façon correcte, on cherche à obtenir l'énergie pour alimenter le moteur par le biais de la batterie.

Les moyens d'interconnexion peuvent bien entendu également être commandés à l'aide d'une interface utilisateur et/ou à l'aide d'autres paramètres liés au fonctionnement du véhicule (vitesse ou état de marche/arrêt du moteur notamment) et/ou à celui de la batterie. On peut ainsi par exemple passer dans un mode de fonctionnement non conventionnel si les circonstances l'exigent (notamment si on détecte un défaut de fonctionnement de l'un des modules de stockage). On pourrait également, le cas échéant, envisager de positionner les moyens d'interconnexion en position d'arrêt à l'arrêt du moteur.

Le véhicule peut comprendre un convertisseur de courant continu/continu (DC/DC), interposé entre le moteur et l'un au moins des modules de stockage d'énergie, notamment entre les moyens d'interconnexion et le moteur. Pour limiter le nombre d'éléments dans le véhicule, un convertisseur peut notamment être placé à la sortie des moyens d'interconnexion puisque l'énergie électrique n'arrive pas des deux branches électriques (et donc sous deux formes non similaires) simultanément. On pourrait toutefois également envisager qu'au moins une, notamment chaque, branche électrique comprenne un convertisseur interposé entre les moyens de stockage et les moyens d'interconnexion.

Le ou au moins l'un des convertisseurs de courant continu (ou hacheur) peut fonctionner comme un variateur de vitesse, le véhicule comprenant également des moyens de commande du variateur, commandant le variateur en fonction d'au moins un paramètre de la liste suivante :
- paramètres liés au fonctionnement du premier et/ou du deuxième module de stockage d'énergie, notamment état de charge,
- paramètres liés au fonctionnement du véhicule, notamment vitesse du véhicule ou état du moteur,
- signal en provenance d'une interface utilisateur.

Les moyens de commande du variateur peuvent notamment être aptes à communiquer avec l'un ou plusieurs des éléments suivants :
- les moyens de surveillance du premier module de stockage,
- les moyens de surveillance du deuxième module de stockage,
- les moyens de surveillance des autres organes du véhicule, notamment bus CAN du véhicule.

La tension attribuée au moteur peut notamment être fonction d'un signal relatif à la pédale d'accélération, et éventuellement d'autres éléments tels que des moyens de mesure de l'état des supercondensateurs et des batteries, une horloge, etc. On peut notamment envisager que les moyens de commande soient prévus pour brider la tension de sortie du variateur lorsque c'est la batterie qui est connectée au moteur, et/ou que le niveau de charge des moyens de stockage connectés au moteur est inférieur à un niveau de seuil, et/ou qu'on détecte une anomalie concernant l'un des moyens de stockage, notamment celui connecté au moteur, afin de ne pas utiliser de l'énergie en prenant inutilement de la vitesse.

Les moyens de stockage d'énergie sont de préférence disposés dans le toit du véhicule électrique. Cela est particulièrement intéressant lorsque les premiers moyens de connexion sont placés en partie haute du véhicule pour diminuer la distance à parcourir entre la station et les supercondensateurs, et augmenter ainsi le rendement du stockage d'énergie. De préférence, ils sont disposés dans un coffre de toit du véhicule, notamment rapporté sur le véhicule. On peut ainsi effectuer une maintenance plus efficace de la partie stockage d'énergie du véhicule.

Le véhicule peut bien entendu récupérer de l'énergie au freinage. Le moteur fonctionne comme un générateur lors des phases de freinage et permet de recharger les moyens de stockage d'énergie avec lesquels il est connecté au moment de la récupération. Comme il est connu, le véhicule peut bien entendu comprendre un système additionnel de freinage par friction, l'énergie étant également éventuellement récupérée depuis ce système additionnel de freinage.

De préférence, le premier module de stockage d'énergie comprend au moins un pack comprenant une pluralité de supercondensateurs en série, notamment deux packs identiques en parallèle.

La batterie peut quant à elle par exemple comprendre des cellules (notamment 6) reliées en série et composées chacune d'une pluralité d'électrodes positives et négatives en parallèle.

Les configurations des supercondensateurs et batteries pourraient bien entendu différer de ce qui a été décrit à condition que les associations des différents éléments permette de satisfaire aux conditions d'utilisation du véhicule, notamment en termes de tension et de capacité de stockage.

Le véhicule est notamment un véhicule de transport en commun, ayant une grande capacité. Il peut notamment être monté sur pneus comme un autobus ou rails comme un tramway.

La présente invention a également pour objet une installation de transport, comprenant :
- au moins un véhicule tel que décrit précédemment, comprenant des moyens de connexion, dits premiers moyens de connexion, du premier module de stockage avec une source extérieure au véhicule, et
- au moins une station de recharge du véhicule disposées sur un trajet du véhicule et au voisinage desquelles le véhicule est destiné à s'arrêter, reliée à au moins une source d'énergie et comportant des troisième moyens de connexion, complémentaires des premiers moyens de connexion du véhicule, aptes à relier la ou l'une des sources d'énergie au premier module de stockage.

La source d'énergie est en premier lieu un réseau de distribution électrique urbain. Alternativement, ou en complément, la ou au moins l'une des stations peut être reliée à une source d'énergie autonome, notamment obtenue à l'aide d'une énergie renouvelable propre (énergie solaire ou éolienne par exemple). Les panneaux photovoltaïques sont particulièrement adaptés. Ils permettent d'obtenir de l'énergie électrique à partir des photons issus du rayonnement solaire et sont de ce fait particulièrement adaptés à des zones très ensoleillées ou dans lesquelles il est difficile de construire un accès au réseau de distribution d'électricité. Les panneaux peuvent alors être placés sur le toit de la station ou peuvent être disposés à distance de la station.

Dans un mode de réalisation, les premiers moyens de connexion du véhicule comprennent un bras notamment télescopique, apte à s'étendre en saillie du véhicule et comprenant un connecteur à son extrémité, les troisième moyens de connexion comprenant un connecteur complémentaire de celui situé à l'extrémité du bras et disposé au niveau de la station de sorte que les deux connecteurs du véhicule et de la station puissent entrer en contact, au moment de l'arrêt du véhicule à la station.

La ou au moins l'une des stations peut également comprendre des moyens de stockage d'énergie comprenant au moins un troisième module de stockage comprenant un ou plusieurs supercondensateurs relié électriquement d'une part à la ou l'au moins une des sources d'énergie et d'autre part aux troisièmes moyens de connexion. Ce ou ces supercondensateurs permettent mieux réguler l'électricité en provenance du réseau de distribution électrique. Ainsi, au lieu de faire une demande d'énergie au réseau considérable en un temps limité correspondant au temps de l'arrêt du véhicule en station, le ou les supercondensateurs de la station sont chargés entre le passage de deux véhicules à une vitesse peu élevée, sollicitant moins le réseau électrique, puis le ou les supercondensateurs de la station restituent l'énergie au véhicule très rapidement, puisque ce type de moyens de stockage peut se décharger très rapidement.

La ou au moins l'une des stations comprend au moins un convertisseur courant continu/continu (DC/DC) interposé entre le troisième module de stockage et les troisièmes moyens de connexion.

La ou au moins l'une des stations est reliée électriquement à un réseau de distribution urbain formant la ou l'une des sources d'énergie, et comprend un convertisseur courant alternatif/courant continu (AC/DC) interposé entre le réseau et les troisièmes moyens de connexion, notamment entre le réseau et le troisième module de stockage. L'énergie est en effet stockée par les moyens de stockage (embarqués ou situés dans la station) sous forme continue, alors que l'énergie circule sur le réseau de distribution sous forme alternative. Un convertisseur de courant continu peut également être interposé entre chaque source d'énergie, notamment le réseau de distribution et le troisième module de stockage.

La ou l'au moins une des stations peut aussi comprendre des quatrième moyens de connexion, complémentaires des deuxièmes moyens de connexion du véhicule, aptes à relier la ou l'une des sources d'énergie au deuxième module de stockage. Ces quatrièmes moyens de connexion sont distincts des troisièmes moyens de connexion.

On notera également que, lorsqu'une station est reliée à une source d'énergie autonome, ladite station comprend de préférence alors également un quatrième module de stockage comportant au moins une batterie relié électriquement à la source d'énergie autonome afin de stocker l'énergie en provenance de cette source. Ce quatrième module de stockage peut alimenter le troisième module de stockage et/ou directement les troisièmes et/ou les quatrièmes moyens de connexion. Un ou plusieurs convertisseurs peuvent également être interposés entre la source d'énergie et le quatrième module de stockage ou le quatrième module et les moyens de connexion auxquels il est électriquement relié. On notera que le quatrième module est particulièrement adapté pour alimenter les quatrièmes moyens de connexion car le temps de charge de ce quatrième module est relativement long et ne pourrait donc pas apporter beaucoup d'énergie au premier module lors de l'arrêt à la station.

On va maintenant décrire un véhicule et une installation selon un mode de réalisation de l'invention, en se référant aux dessins ci-joints, qui sont donnés uniquement à titre d'exemple et ne délimitent pas à eux seuls le cadre de l'invention, dans lesquels sont montrés :
- la figure 1 représentant schématiquement le principe d'une installation selon l'invention,
- la figure 2 illustrant schématiquement le schéma électrique d'un véhicule et de la station associée.

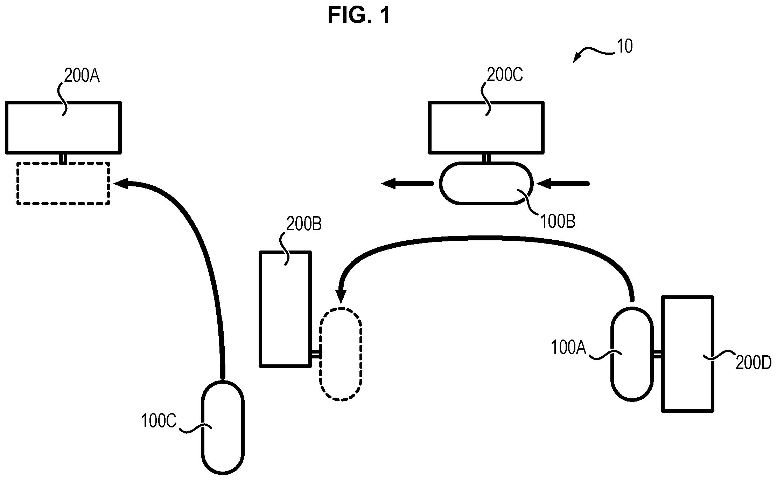

On a décrit sur la figure 1 une installation 10 selon un mode de réalisation particulier de l'invention, comprenant une pluralité de véhicules 100A-100C circulant dans une agglomération, dans le cas présent sur des trajets distincts, et des stations 200A-200D placées sur les trajets des différents véhicules, ces stations formant des stations d'arrêt pour les véhicules, au niveau desquels les passagers du véhicule peuvent demander la montée dans le véhicule ou la descente du véhicule. Ces stations forment également une station de charge pour le véhicule, au niveau de laquelle ce dernier peut recharger les moyens de stockage d'énergie qu'il embarque. Pour cela, il se connecte à la station lorsqu'il s'arrête au niveau de celle-ci, comme cela est représenté schématiquement dans le cas du véhicule 100A (avec la station 200D) et du véhicule 100B (avec la station 200C).

Le véhicule est configuré de sorte qu'il n'est pas nécessaire qu'il s'arrête à chaque station. Dans le cas représenté sur les figures, par exemple, le véhicule 100A s'arrête à la station 200D puis passe sans s'arrêter devant la station 200C, notamment parce qu'aucun des passagers du véhicule n'a demandé l'arrêt, et s'arrêtera à nouveau au niveau de la station 200B.

Le véhicule peut être un bus qui circule sur pneumatique ou circuler sur rails pré-positionnés sur la voie publique. Quel que soit son mode de déplacement, le véhicule circule de façon autonome, à l'aide de l'énergie embarquée, entre les stations.

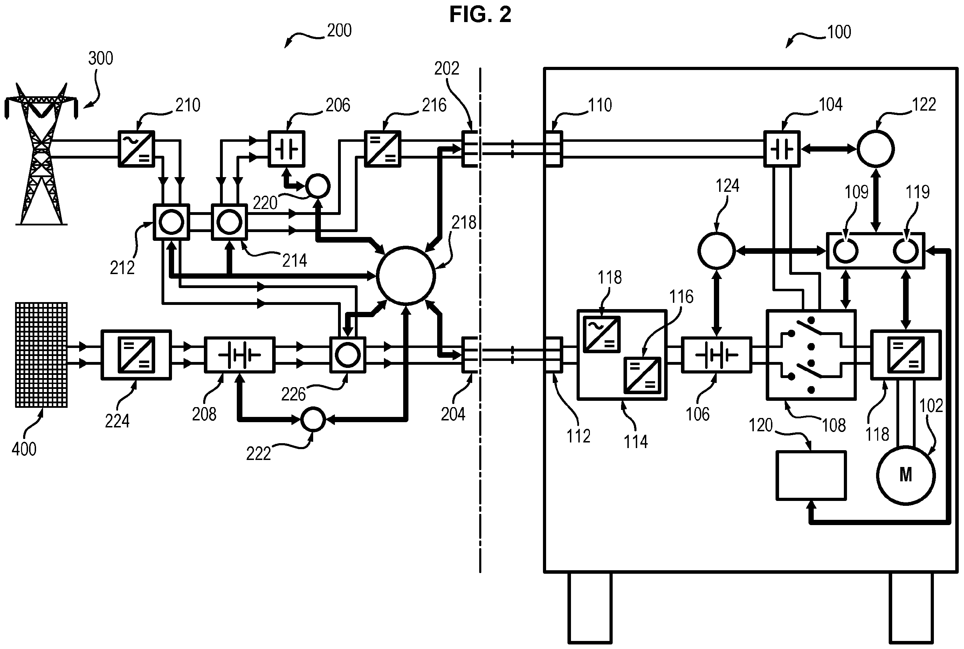

Maintenant qu'on a expliqué de façon générale le principe de l'invention, on va décrire plus en détails, à l'aide de la figure 2, l'architecture d'un véhicule 100 et d'une station de charge 200 tels qu'appartenant à l'installation selon un mode de réalisation de l'invention. Sur cette figure les connexions de type électronique de puissance sont représentées en trait fin, alors que les connexions de type destiné à la communication entre les éléments sont représentées à l'aide de double flèche.

Le véhicule 100 selon ce mode de réalisation comprend, comme on le voit sur la figure 2, un moteur 102 électrique alimenté d'une part par des premiers moyens de stockage d'énergie 104, comprenant un ou plusieurs modules de supercondensateurs, et d'autre part, par des deuxièmes moyens de stockage 106, formant une batterie telle qu'une batterie lithium-métal-polymère, comportant une électrolyte solide. On rappelle que les supercondensateurs peuvent se charger et se décharger très rapidement et permettent ainsi de fournir une grande énergie sur un temps très court. Quant aux batteries, elles ne permettent pas de se charger aussi rapidement mais peuvent conserver l'énergie stockée bien plus longuement et en plus grande quantité qu'un supercondensateur.

Le véhicule ainsi muni de ces deux moyens de stockage d'énergie peut circuler de longues heures dans un environnement comprenant des stations rapprochées sans avoir besoin de s'arrêter plus que quelques secondes à chaque fois afin de recharger les moyens de stockage d'énergie (à l'aide de son module de supercondensateurs). En revanche, lorsque l'on arrive dans une zone dans laquelle des stations ne peuvent être implantées, par exemple en hypercentre, en raison de contraintes d'espace ou d'esthétique, le véhicule peut circuler sur une courte partie de son trajet à l'aide de sa batterie 106. Celle-ci doit être évidemment rechargée mais comme elle n'est pas utilisée de façon intensive, le véhicule peut ne s'arrêter pour recharge que beaucoup plus rarement qu'un véhicule ne comprenant qu'une batterie en guise de moyens de stockage d'énergie.

Le véhicule comprend également des moyens d'interconnexion 108 reliés d'une part (en sortie) au moteur 102 et, d'autre part (en entrée), au module de supercondensateurs 104 et à la batterie 106. Plus précisément, les moyens d'interconnexion comprennent un interrupteur configuré pour présenter une première position reliant le module de supercondensateurs 104 au moteur 102 et une deuxième position reliant la batterie 106 au moteur 102. L'interrupteur est plus particulièrement configuré pour ne pas permettre de relier à la fois le module de supercondensateurs 104 et la batterie 106 au moteur 102. Autrement dit, les connexions électriques du module de supercondensateurs 104 et de la batterie 106 au moteur sont mutuellement exclusives. L'interrupteur comprend également, comme cela est représenté à la figure 2, une troisième position dans laquelle ni le module de supercondensateurs 104 ni la batterie 106 n'est reliée au moteur. Cette position est bien entendu réservée à un mode dans lequel le véhicule est à l'arrêt, son moteur n'étant pas alimenté lorsque l'interrupteur est placé dans cette position. Elle est bien entendu optionnelle. Un état dans lequel le moteur n'est relié à aucun des moyens de stockage peut également être atteint à l'aide d'autres éléments du véhicule, par exemple à l'aide du variateur, décrit ci-après.

Les moyens d'interconnexion 108 sont aptes à communiquer avec des moyens de commande 109 commandant le changement de position de l'interrupteur en fonction de paramètres reçus d'autres éléments du véhicule, comme on le commentera par la suite.

Le module de supercondensateur 104 et la batterie 106 sont tous deux aptes à être reliés à des moyens de charge extérieur par l'intermédiaire de moyens de connexion, respectivement premiers moyens de connexion 110 et deuxièmes moyens de connexion 112, permettant de relier électriquement chacun des moyens de stockage d'énergie 104, 106 à un circuit externe. Les supercondensateurs sont notamment chargés par l'intermédiaire des stations, de façon régulière lors du trajet du véhicule, comme cela a été décrit plus haut, alors que la batterie 106 est chargée lorsque le véhicule fait un arrêt de longue durée. La station décrite dans le mode de réalisation de la figure 2 comprend des moyens pour se connecteur aux premiers et deuxièmes moyens de connexion 110, 112 mais il n'est pas obligatoire qu'elle comprenne des moyens aptes à se connecter aux deuxièmes moyens de connexion 112 permettant la charge de la batterie.

De préférence, les premiers moyens de connexion 110 comprennent un connecteur situé à l'extrémité d'un bras de connexion mobile et notamment rétractable et les deuxièmes moyens de connexion 112 sont situés dans une trappe à accès verrouillé (par exemple par une clé) située sur le véhicule.

Le véhicule 10 comprend également un chargeur 114 relié à la batterie 106 et permettant d'adapter l'énergie provenant de l'extérieur aux besoins de charge de ladite batterie. La batterie est destinée à recevoir un courant continu et le chargeur comporte notamment un convertisseur de courant continu/continu (DC/DC) 116 et un convertisseur de courant alternatif à continu (AC-DC) 118 pour permettre de charger la batterie 106 à partir d'une source d'énergie délivrant un courant alternatif ou un courant continu.

On notera également que le véhicule comprend un variateur 118 en amont du moteur 102 et placé notamment entre les moyens d'interconnexion 108 et le moteur. Le variateur comprend notamment un convertisseur de courant continu/continu et est couplé à des moyens de commande 119 aptes à communiquer avec d'autres éléments du véhicule et à commander le variateur 118 en fonction des données reçues de ces éléments pour qu'il délivre au moteur une tension en rapport avec la puissance mécanique que l'on cherche à donner au véhicule.

Les moyens de commande 109 des moyens d'interconnexion 108 et les moyens de commande 119 du variateur 118 sont aptes à communiquer notamment avec le bus CAN du véhicule 120, ainsi qu'avec des moyens de surveillance 122, respectivement 124, de caractéristiques relatives aux moyens de stockage d'énergie 104, respectivement 106.

Le bus CAN 120 du véhicule permet d'obtenir des données relatives à d'autres organes du véhicule que les moyens de stockage, par exemple à la vitesse du véhicule, à une commande mécanique de l'utilisateur sur la pédale d'accélérateur, etc. Les moyens de surveillance 122, 124 permettent d'obtenir des données mesurées par lesdits moyens de surveillance 122, 124 concernant différents paramètres des moyens de stockage d'énergie 104, 106, tels que l'état de charge du moyen de stockage, ou de détecter un défaut de fonctionnement desdits moyens de stockage.

Ainsi, en fonction des données du bus CAN et des moyens de surveillance, on peut commander au plus juste les moyens d'interconnexion et le variateur, par exemple en agissant de la façon suivante :
- Lorsque le véhicule est à l'arrêt, passage des moyens d'interconnexion en position d'arrêt,
- Lorsque le niveau de charge du module de supercondensateurs est inférieur à un niveau de seuil bas, passage de la position des moyens d'interconnexion à la position connectant la batterie au moteur,
- Inversement, lorsque le niveau de charge du module de supercondensateurs est supérieur à un niveau de seuil haut, passage de la position des moyens d'interconnexion à la position connectant les supercondensateurs au moteur,
- Lorsque le niveau de charge des deux moyens de stockage est en dessous d'un niveau de seuil, connexion de la batterie au moteur et commande du variateur de sorte qu'une tension de seuil à ne pas dépasser soit déterminée quelle que soit la demande effectuée par l'utilisateur à l'aide de la pédale d'accélérateur, afin de limiter les dépenses énergétiques inutiles.

On notera bien entendu que des informations peuvent être transmises par le système décrit ci-dessus au bus CAN du véhicule de sorte qu'il soit signalé à l'utilisateur, notamment par l'intermédiaire du tableau de bord du véhicule que le niveau de charge de l'un ou des deux moyens de stockage est faible ou que l'un de ces moyens de stockage est en fonctionnement défectueux.

On notera également que certains moyens de stockage du véhicule au moins, notamment le module de supercondensateurs, et les moyens de connexion associés peuvent être placés dans un coffre de toit rapporté à partir duquel ils peuvent se connecter aux éléments déjà installés dans le véhicule (tel que le moteur ou le bus CAN). Cela facilite la maintenance de la partie permettant de stocker l'énergie embarquée.

On va maintenant décrire en détail une station 200 permettant l'arrêt et la charge du véhicule.

La station 200 est reliée à au moins une source d'énergie : dans le cas présent, elle est reliée d'une part à un réseau électrique externe 300 tel qu'un réseau de distribution électrique urbain qui fournit de l'énergie sous forme de courant alternatif, et, d'autre part, à des cellules, notamment des panneaux, photovoltaïques 400, qui peuvent être situés sur le toit de la station ou à distance de celle-ci et distribuent l'énergie sous forme de courant continu. Une version plus simple de la station peut être reliée à seulement l'une de ces sources d'énergie, notamment au réseau de distribution 300.

La station 200 comprend également des moyens de connexion, appelés troisième moyens de connexion 204, complémentaires des premiers moyens de connexion 110, ainsi que des quatrièmes moyens de connexion 204, complémentaires des deuxièmes moyens de connexion 112 du véhicule. Dans le cas où les troisièmes moyens de connexion sont situés à l'extrémité d'un bras rétractable, les troisièmes moyens de connexion comprennent un connecteur situé essentiellement à la même hauteur que le bras rétractable. Là encore, on notera que la présence des quatrièmes moyens de connexion 204 n'est pas indispensable. En revanche, la présence des troisièmes moyens de connexion est nécessaire pour permettre la recharge rapide des supercondensateurs du véhicule.

La station 200 comprend également des moyens de stockage d'énergie situés dans la station. Elle comprend en particulier des troisièmes moyens de stockage d'énergie, soit un module de supercondensateurs 206, relié électriquement aux troisièmes moyens de connexion, et des quatrièmes moyens de connexion, soit une batterie 208, reliée électriquement aux quatrièmes moyens de connexion 204.

Ainsi, on peut charger rapidement (entre les passages à la station de deux véhicules successifs) le module de supercondensateurs 206 de la station 200 et décharger rapidement, en moins d'une minute, ledit module 206 pour recharger le module de supercondensateurs complémentaire 104 du véhicule, connecté au module 206 de la station 200 par le biais des premiers et troisièmes moyens de connexion 110, 202 qui sont reliés entre eux.

Les quatrièmes moyens de stockage 208 sont optionnels. Ils sont toutefois utiles dans le cas où la station 200 est reliée à une source d'énergie qui n'est pas disponible en permanence (type panneaux photovoltaïques) comme représenté sur la figure 2. Dans ce cas, la batterie 208 est située en aval des panneaux photovoltaïques 400 et permet de stocker pour une longue durée l'énergie récupérée par les panneaux. Lorsqu'un véhicule s'arrête et se connecte par le biais des deuxièmes et quatrièmes moyens de connexion afin de recharger sa batterie embarquée 106, l'énergie stockée dans la batterie 208 de la station est restituée à la batterie embarquée 106.

On va maintenant décrire plus précisément le circuit qui permet la charge du module de supercondensateurs 104 situé dans le véhicule au niveau de la station. Ce circuit comprend, comme on l'a déjà décrit, un module de supercondensateurs 206 relié d'une part à un réseau électrique urbain 300 et d'autre part à des troisièmes moyens de connexion auxquels est destiné à se connecter le véhicule par le biais des premiers moyens de connexion. Dans le cas présent, le circuit comprend en aval de la liaison avec le réseau 300 un convertisseur AC-DC 210, permettant de transformer l'énergie électrique distribuée sous forme de courant alternatif en énergie électrique sous forme de courant continu. L'énergie stockée dans les différents moyens de stockage est en effet stockée sous forme de courant continu. Ce convertisseur 210 est de préférence situé à l'entrée de la station, de sorte que l'énergie soit disponible directement sous forme continue, quelle que soit sa destination ensuite.

Le circuit de charge du module de supercondensateurs embarqué 104 comprend également des moyens d'interconnexion 212, 214 qui permettent de diriger l'énergie en provenance du réseau urbain dans les différentes branches du circuit. Les moyens d'interconnexion 212 permettent de diriger l'énergie vers une première branche destinée au chargement du module de supercondensateurs embarqué 104 du véhicule et donc reliée aux troisièmes moyens de connexion 202, ou alternativement vers une deuxième branche destinée au chargement de la batterie embarquée 106 du véhicule et donc reliée aux quatrièmes moyens de connexion 112. Les moyens d'interconnexion 214 permettent de diriger l'énergie provenant du convertisseur 210, et circulant dans la première branche, soit vers les troisièmes moyens de connexion 202 directement, soit vers le module de supercondensateurs 206 de la station. Ils permettent également de connecter électriquement le module de supercondensateurs 206 de la station 200 avec les troisièmes moyens de connexion 202.

Le circuit de charge comprend en outre un convertisseur de courant continu/continu DC-DC 216 interposé entre le module de supercondensateurs 206 et les troisièmes moyens de connexion 202 pour adapter la tension en sortie du module de supercondensateurs 206 de la station à la tension demandée par le module de supercondensateurs 104 du véhicule. De préférence, le convertisseur 216 est située entre les moyens d'interconnexion 214 et les troisièmes moyens de connexion 202 pour pouvoir traiter à l'aide d'un seul convertisseur l'énergie en provenance du module de supercondensateurs ou directement du réseau électrique. On notera que ce convertisseur doit être interposé entre les deux modules de supercondensateurs, de la station et du véhicule. Il pourrait donc aussi être placé dans le véhicule.

Les moyens d'interconnexion 212, 214 sont commandés par des moyens de commande 218 aptes à communiquer avec ces moyens d'interconnexion et commandant leur fonctionnement en fonction de données susceptibles de provenir de différents éléments, tels que des moyens de surveillance 220, 222 des différents moyens de stockage 206, 208 de la station 200 et des moyens de connexion 202, 204 de celle-ci. Les moyens de surveillance 220, 222 permettent d'obtenir des données relatives aux paramètres des moyens de stockage (niveau de charge, détection d'un défaut) et sont similaires à ceux décrits en relation avec le véhicule. Les moyens de connexion permettent la simple détection du branchement d'un connecteur du véhicule dans celui de la station ou la transmission de données en provenance du véhicule, par exemple par le biais d'un fil pilote. De telles données peuvent être celles fournies par les moyens de surveillance 122 ou 124 des moyens de stockage 104, 106 du véhicule, lorsque le moyen de stockage concerné est connecté à la station.

Pour la charge du module de supercondensateurs embarqué 104, la station peut notamment fonctionner de la façon suivante. Lorsque la connexion d'aucun véhicule n'est détectée au niveau des troisièmes moyens de connexion 202 de la station, les moyens d'interconnexion 214 et 212 sont placés en priorité dans une position permettant à l'énergie électrique du réseau de distribution 300 d'être dirigée directement dans le module de supercondensateurs 206 de la station. Lorsqu'un véhicule se connecte à la station, les troisièmes moyens de connexion 202 le signalent et les moyens de commande 218 commandent le passage des moyens d'interconnexion 214 dans une position qui permet la transmission de l'énergie stockée dans le module de supercondensateurs 206 de la station à celui du véhicule. Lorsque les moyens de surveillance 220 indiquent que le niveau de charge du module 206 est inférieur à un niveau de seuil, et si le véhicule est encore connecté (ou alternativement, si le niveau de charge du module de supercondensateurs 104 du véhicule est inférieur à un niveau de seuil haut indiquant la complétion de la charge), les moyens de commande 218 commandent le passage des moyens d'interconnexion 214 dans une position permettant la connexion directe du réseau 300 aux moyens de connexion 202.

On va maintenant décrire la deuxième branche du circuit de la station permettant la recharge de la batterie du véhicule. Comme on l'a déjà décrit, cette branche comprend une batterie 208 en aval de cellules photovoltaïques 400. La batterie est d'autre part reliée aux quatrièmes moyens de connexion 204. Le circuit de charge de la batterie comprend en outre un chargeur 224 interposé entre les panneaux photovoltaïques et la batterie et comportant notamment un convertisseur continu/continu DC-DC permettant d'optimiser la charge de la batterie à partir des panneaux photovoltaïques. Le chargeur 224 peut notamment être de type MPPT (Maximum Power Point Tracking) à savoir qu'il détecte quelle tension demander pour que la puissance fournie par les panneaux photovoltaïque soit maximale et quelle tension transférer ensuite à la batterie pour que la puissance transmise soit maximale.

La branche de charge de la batterie embarquée du véhicule comporte également des moyens d'interconnexion 226 en aval de la batterie. Ces moyens sont interposés entre la batterie 208 et les moyens d'interconnexion 204. Ils permettent notamment de relier aux quatrièmes moyens de connexion soit la batterie 208, soit le réseau de distribution électrique 300. Comme décrit précédemment, les moyens d'interconnexion sont commandés par les moyens de commande 218, à partir des données obtenues des moyens de surveillance 220, 222 et des moyens de connexion 202, 204.

Dans le cas présent, lorsque l'on détecte la connexion du véhicule à la station par le biais des deuxièmes et quatrièmes moyens de connexion, les moyens de commande 218 commandent les moyens d'interconnexion 226 pour que la batterie 208 soit reliée électriquement à la batterie 106 du véhicule. Lorsque les moyens de surveillance 222 indique que le niveau de charge de la batterie est inférieur à un niveau de seuil bas, les moyens de commande 218 commandent les moyens d'interconnexion 212, 226 pour que la batterie 106 du véhicule soit directement reliée au réseau de distribution, si la connexion du véhicule par les biais des deuxième et quatrièmes moyens de connexion est toujours effective, ou alternativement, s'il est détecté que le niveau de charge de la batterie 106 du véhicule n'est pas supérieur à un niveau de seuil haut. On pourrait également envisager de connecter à nouveau la batterie 208 aux moyens de connexion lorsque son niveau de charge repasse au-dessus d'un certain niveau de charge.

On notera que dans ce cas, le chargeur 114 interposé entre les batteries 208 de la station et 106 du véhicule est situé dans le véhicule. Il pourrait toutefois être mis en place au niveau de la station, notamment entre les moyens d'interconnexion 226 et les quatrièmes moyens de connexion.

On notera également que, dans le cas où la station comprend à la fois un système pour la charge des supercondensateurs du véhicule et un système pour la charge des batteries du véhicule, comme dans l'exemple de la présente demande, ces systèmes peuvent être complétement indépendants l'un de l'autre et ne pas communiquer entre eux.

L'installation selon l'invention fonctionne de la façon suivante :
- Lorsque qu'aucun véhicule n'est présent en station, le module de supercondensateurs 206 situé dans la station est chargé à partir du réseau urbain, la batterie 208 de la station étant également chargée ensuite si le module de supercondensateurs 206 a un niveau de charge supérieur à un niveau de seuil,
- Lorsqu'un véhicule arrive en station, le conducteur le positionne de sorte que le bras comprenant les premiers moyens de connexion 110 soit sensiblement positionné en vis-à-vis des moyens de connexion 202, à l'aide de repères visuels et éventuellement de ralentisseurs et/ou de cales situées au niveau de la chaussée,
- Le déplacement du bras est effectué lorsqu'un capteur repère la présence du connecteur 110 en vis-à-vis du bras et que le chauffeur envoie une commande (par exemple, par l'intermédiaire de l'interface du véhicule ou d'un moyen de commande séparé spécifique aux stations). Les moyens de connexion 110 du véhicule et 202 de la station sont alors reliés,
- La connexion étant effective, la station le détecte et commande les moyens d'interconnexion 214 pour le transfert de l'énergie depuis le module de supercondensateurs 206 de la station vers le module de supercondensateurs 104 du véhicule. Préférentiellement, lorsque la connexion est effective, le roulage du véhicule est interdit (ce qui est par exemple effectué en commandant le variateur 118 et/ou les moyens d'interconnexion 108). Une signalisation visuelle et/ou sonore au niveau de la station ou du véhicule peut également être prévue pour signaler l'état de la connexion,
- Lorsque l'on détecte que le niveau de seuil du module de supercondensateurs 104 du véhicule est dépassé et/ou sur commande du conducteur (les deux conditions pouvant être cumulatives ou non), le connecteur 110 du véhicule est déconnecté par rétractation du bras de connexion. Lorsque le bras est rétracté, état détecté par exemple par un capteur de présence, le roulage du véhicule est à nouveau autorisé. Le cycle décrit ci-dessus peut alors recommencer avec l'arrivée du prochain véhicule,
- Lorsqu'un véhicule utilise la station pour charge sa batterie 106, par exemple de nuit, on connecte le connecteur 112 du véhicule au connecteur 204 de la station. La détection de la présence du connecteur déclenche une commande des moyens d'interconnexion 212 pour transférer de l'énergie depuis le réseau urbain 300 et/ou les moyens de stockage 208 dans la batterie du véhicule. La connexion entre la station et le véhicule est alors effectuée manuellement. Des moyens peuvent être également prévus pour empêcher le roulage du véhicule lorsque la connexion entre les moyens 112, 204 est effective.

L'installation décrite sur la figure 2 est un mode de réalisation particulier de l'invention, qui ne se limite pas à ce mode de réalisation et aux variantes évoquées dans la description. D'autres variantes peuvent notamment rentrer dans le cadre de la revendication 1.

## Revendications

1. Véhicule électrique (100, 100A-100C), comprenant un moteur électrique (102) et des moyens de stockage d'énergie (104, 106) embarqués reliés électriquement au moteur électrique (102) afin d'alimenter ledit moteur électrique (102) en énergie électrique, les moyens de stockage d'énergie (104,106) comprenant:
- d'une part, un premier module de stockage d'énergie (104) comprenant au moins un supercondensateur,
- d'autre part un deuxième module de stockage d'énergie (106) comprenant au moins une batterie,
les premier et deuxième modules de stockage d'énergie (104, 106) étant agencés sur des branches électrique parallèles, le véhicule (100,100A-100C) comprenant des moyens d'interconnexion (108) disposés entre les moyens de stockage d'énergie (104, 106) et le moteur électrique (102), **caractérisé en ce que** les moyens d'interconnexion (108) sont commandés en fonction du niveau de charge du premier module de stockage d'énergie à supercondensateur (104) et comprenant un interrupteur comprenant une pluralité de positions et configuré pour présenter une première position, dans laquelle le premier module de stockage d'énergie à supercondensateur (104) est relié au moteur électrique (102), et une deuxième position, dans laquelle le deuxième module de stockage d'énergie à batterie (106) est relié au moteur électrique (102),
l'interrupteur étant configuré pour ne pas permettre de relier à la fois le premier module de stockage d'énergie à supercondensateur (104) et le deuxième module de stockage d'énergie à batterie (106) au moteur électrique (102), l'interrupteur comprenant une troisième position, dit d'arrêt, dans laquelle ni le premier module de stockage d'énergie à supercondensateur (104), ni le deuxième module de stockage d'énergie à batterie (106) n'est relié au moteur électrique (102), cette troisième position est réservée à une mode dans lequel le véhicule (100,100A-100C) est à l'arrêt, son moteur électrique (102) n'étant pas alimenté lorsque l'interrupteur est placé dans cette position, le véhicule (100,100A-100C) comprenant:
- des premiers moyens de connexion (110), comprenant un connecteur et aptes à relier le premier module de stockage d'énergie à supercondensateur (104) à des troisièmes moyens de connexion complémentaires (202), situés à l'extérieur du véhicule (100,100A-100C),
- des deuxièmes moyens de connexion (112), comprenant un connecteur et qui sont distincts des premiers moyens de connexion (110) et qui sont aptes à relier le deuxième module de stockage d'énergie à batterie (106) à des quatrièmes moyens (204) de connexion complémentaires, qui sont situés à l'extérieur du véhicule (100,100A-100C) et qui sont distincts des troisièmes moyens de connexion complémentaires (202).

2. Véhicule (100,100A-100C) selon la revendication précédente, comprenant au moins un convertisseur courant continu/continu (116) et/ou courant alternatif/courant continu (114) interposé entre les premiers (110) et/ou deuxièmes moyens de connexion (112) et le module de stockage correspondant (104,106).

3. Véhicule (100,100A-100C) selon l'une quelconque des revendications précédentes, comprenant des moyens de commande (109) des moyens d'interconnexion (108), aptes à commander les moyens d'interconnexion (108) en fonction de l'un ou plusieurs des paramètres suivants :
- paramètres liés au fonctionnement du premier et du deuxième module de stockage d'énergie (104, 106), notamment état de charge,
- paramètres liés au fonctionnement du véhicule (100,100A-100C), notamment vitesse du véhicule ou état du moteur électrique (102),
- signal en provenance d'une interface utilisateur.

4. Véhicule (100,100A-100C) selon la revendication précédente, dans lequel les moyens de commande (109) des moyens d'interconnexion (108) sont aptes à communiquer avec l'un ou plusieurs des éléments suivants :
- des moyens de surveillance du premier module de stockage (122),
- des moyens de surveillance du deuxième module de stockage (124),
- des moyens de surveillance des autres organes du véhicule (100,100A-100C), notamment bus CAN du véhicule (120).

5. Véhicule (100,100A-100C) selon l'une quelconque des revendications précédentes, comprenant un autre convertisseur de courant continu/continu (118), interposé entre le moteur électrique (102) et l'un au moins des modules de stockage d'énergie (104, 106), notamment entre les moyens d'interconnexion (108) et le moteur électrique (102).

6. Véhicule (100,100A-100C) selon la revendication précédente, dans lequel le ou au moins l'un des convertisseurs de courant continu/continu (116,118) fonctionne comme un variateur de vitesse, le véhicule (100,100A-100C) comprenant également des moyens de commande (119) du variateur, commandant le variateur en fonction d'au moins un paramètre de la liste suivante :
- paramètres liés au fonctionnement du premier et/ou du deuxième module de stockage d'énergie (104, 106), notamment état de charge,
- paramètres liés au fonctionnement du véhicule (100,100A-100C), notamment vitesse du véhicule (100,100A-100C) ou état du moteur électrique (102),
- signal en provenance d'une interface utilisateur.

7. Véhicule (100,100A-100C) selon la revendication précédente, dans lequel les moyens de commande (119) du variateur sont aptes à communiquer avec l'un ou plusieurs des éléments suivants :
- les moyens de surveillance du premier module de stockage (122),
- les moyens de surveillance du deuxième module de stockage (124),
- les moyens de surveillance des autres organes du véhicule (100,100A-100C), notamment bus CAN du véhicule (120).

8. Véhicule (100,100A-100C) selon l'une quelconque des revendications précédentes, dans lequel les moyens de stockage (104,106) sont disposés dans un coffre de toit du véhicule (100,100A-100C), de préférence rapporté sur le véhicule (100,100A-100C).

9. Installation de transport (10), comprenant :
- au moins un véhicule (100,100A-100C) selon l'une quelconque des revendications précédentes, comprenant des moyens de connexion (110), dits premiers moyens de connexion (110), du premier module de stockage à supercondensateur (104) avec une source extérieure au véhicule (100,100A-100C), et
- au moins une station de recharge (200,200A-200D) du véhicule (100,100A-100C) disposée sur un trajet du véhicule (100,100A-100C) et au voisinage de laquelle le véhicule (100,100A-100C) est destiné à s'arrêter, la station de recharge (200,200A-200D) étant reliée à au moins une source d'énergie (300, 400) et comportant des moyens de connexion (202), dits troisième moyens de connexion (202), complémentaires des premiers moyens de connexion du véhicule (110), aptes à relier électriquement la ou l'une des sources d'énergie (300, 400) au premier module de stockage à supercondensateur (104).

10. Installation (10) selon la revendication précédente, dans laquelle les premiers moyens de connexion (110) du véhicule (100,100A-100C) comprennent un bras notamment télescopique, apte à s'étendre en saillie du véhicule (100,100A-100C) et comprenant un connecteur à son extrémité, les troisièmes moyens de connexion (202) comprenant un connecteur complémentaire de celui situé à l'extrémité du bras et disposé au niveau de la station de recharge (200,200A-200D) de sorte que les deux connecteurs du véhicule (100,100A-100C) et de la station de recharge (200,200A-200D) puissent entrer en contact.

11. Installation (10) selon l'une quelconque des revendications 9 et 10, dans laquelle la ou au moins l'une des stations de recharge (200,200A-200D) comprend des moyens de stockage d'énergie (206, 208) comprenant au moins un troisième module de stockage (206) comprenant un ou plusieurs supercondensateurs relié électriquement d'une part à la ou l'au moins une des sources d'énergie (300, 400) et d'autre part aux troisième moyens de connexion (202).

12. Installation (10) selon l'une quelconque des revendications 9 à 11, dans laquelle la ou au moins l'une des stations de recharge (200,200A-200D) comprend au moins un convertisseur de courant continu/ continu (216) interposé entre le troisième module de stockage (206) et les troisième moyens de connexion (202).

13. Installation (10) selon l'une quelconque des revendications 9 à 12, dans laquelle la ou au moins l'une des stations de recharge (200,200A-200D) est reliée électriquement à un réseau de distribution urbain (300) formant la ou l'une des sources d'énergie (300,400), et comprend un convertisseur courant alternatif/courant continu (210) interposé entre le réseau de distribution urbaine (300) et les troisième moyens de connexion (202), notamment entre le réseau de distribution urbaine (300) et le troisième module de stockage (206).

14. Installation (10) selon l'une quelconque des revendications 9 à 13, dans laquelle la ou l'au moins une des stations de recharge (200,200A-200D) comprend des quatrième moyens de connexion (204), distincts des troisièmes moyens de connexion (202) et complémentaires des deuxièmes moyens de connexion (112) du véhicule (100,100A-100C) reliés au deuxième module de stockage à batterie (106) du véhicule (100,100A-100C) aptes à relier la ou l'une des sources d'énergie (300,400) au deuxième module de stockage à batterie (106).

15. Installation (10) selon l'une quelconque des revendications 9 à 14, dans laquelle la ou au moins l'une des stations de recharge (200,200A-200D) est reliée à une source d'énergie autonome (400) notamment produite par des panneaux photovoltaïques.

16. Installation (10) selon la revendication précédente, dans laquelle la ou lesdites stations de recharge (200,200A-200D) comprennent également un quatrième module de stockage (208) comportant au moins une batterie relié électriquement à la source d'énergie autonome (400) afin de stocker l'énergie en provenance de cette source et reliée de préférence aux quatrièmes moyens de connexion de la station (204).

## Patentansprüche

1. Elektrofahrzeug (100, 100A-100C), umfassend einen Elektromotor (102) und On-board-Energiespeichermittel (104, 106), die mit dem Elektromotor (102) elektrisch verbunden sind, um den Elektromotor (102) mit elektrischer Energie zu versorgen, wobei die Energiespeichermittel (104, 106) umfassen:
- zum einen ein erstes Energiespeichermodul (104), umfassend mindestens einen Superkondensator,
- zum anderen ein zweites Energiespeichermodul (106), umfassend mindestens eine Batterie,
wobei das erste und zweite Energiespeichermodul (104, 106) auf parallelen elektrischen Schenkeln eingerichtet sind, wobei das Fahrzeug (100, 100A-100C) Zusammenschaltungsmittel (108) umfasst, die zwischen den Energiespeichermitteln (104, 106) und dem Elektromotor (102) angeordnet sind, **dadurch gekennzeichnet, dass** die Zusammenschaltungsmittel (108) in Abhängigkeit vom Ladeniveau des ersten Energiespeichermoduls mit Superkondensator (104) gesteuert werden und einen Schalter umfassen, umfassend eine Vielzahl von Positionen und konfiguriert, um eine erste Position aufzuweisen, in welcher das Energiespeichermodul mit Superkondensator (104) mit dem Elektromotor (102) verbunden ist, und eine zweite Position, in welcher das zweite Energiespeichermodul mit Batterie (106) mit dem Elektromotor (102) verbunden ist,
wobei der Schalter konfiguriert ist, um nicht zu erlauben, das erste Energiespeichermodul mit Superkondensator (104) und das zweite Energiespeichermodul mit Batterie (106) gleichzeitig mit dem Elektromotor (102) zu verbinden,
wobei der Schalter eine dritte, als Stopp bezeichnete Position umfasst, in welcher weder das erste Energiespeichermodul mit Superkondensator (104) noch das zweite Energiespeichermodul mit Batterie (106) mit dem Elektromotor (102) verbunden ist, wobei diese dritte Position einem Modus vorbehalten ist, in welchem das Fahrzeug (100, 100A-100C) stoppt, wobei sein Elektromotor (102) nicht versorgt wird, wenn der Schalter in dieser Position platziert ist,
wobei das Fahrzeug (100, 100A-100C) umfasst:
- erste Verbindungsmittel (110), umfassend einen Verbinder und imstande, das erste Energiespeichermodul mit Superkondensator (104) mit dritten komplementären Verbindungsmitteln (202) zu verbinden, die sich außerhalb des Fahrzeugs (100, 100A-100C) befinden,
- zweite Verbindungsmittel (112), umfassend einen Verbinder und die sich von den ersten Verbindungsmitteln (110) unterscheiden und die imstande sind, das zweite Energiespeichermodul mit Batterie (106) mit vierten komplementären Verbindungsmitteln (204) zu verbinden, die sich außerhalb des Fahrzeugs (100, 100A-100C) befinden und die sich von den dritten komplementären Verbindungsmitteln (202) unterscheiden.

2. Fahrzeug (100, 100A-100C) nach vorangehendem Anspruch, umfassend mindestens einen Gleichstrom/Gleichstrom-Wandler (116) und/oder Wechselstrom/Gleichstrom-Wandler (114), der zwischen den ersten Verbindungsmitteln (110) und/oder zweiten Verbindungsmitteln (112) und dem entsprechenden Speichermodul (104,106) zwischengestellt ist.

3. Fahrzeug (100, 100A-100C) nach einem der vorangehenden Ansprüche, umfassend Steuermittel (109) der Zusammenschaltungsmittel (108), die imstande sind, die Zusammenschaltungsmittel (108) in Abhängigkeit von einem oder mehreren der folgenden Parameter zu steuern:
- Parametern, die mit der Funktion des ersten und/oder des zweiten Energiespeichermoduls (104, 106) verbunden sind, insbesondere dem Ladezustand,
- Parametern, die mit der Funktion des Fahrzeugs (100, 100A-100C) verbunden sind, insbesondere der Geschwindigkeit des Fahrzeugs oder dem Zustand des Elektromotors (102),
- Signal von einer Nutzerschnittstelle.

4. Fahrzeug (100, 100A-100C) nach vorangehendem Anspruch, wobei die Steuermittel (109) der Zusammenschaltungsmittel (108) imstande sind, mit einem oder mehreren der folgenden Elemente zu kommunizieren:
- Überwachungsmitteln des ersten Speichermoduls (122),
- Überwachungsmitteln des zweiten Speichermoduls (124),
- Überwachungsmitteln der anderen Organe des Fahrzeugs (100, 100A-100C), insbesondere dem CAN-Bus des Fahrzeugs (120).

5. Fahrzeug (100, 100A-100C) nach einem der vorangehenden Ansprüche, umfassend einen anderen Gleichstrom/Gleichstrom-Wandler (118), der zwischen dem Elektromotor (102) und mindestens einem der Energiespeichermodule (104, 106), insbesondere zwischen den Zusammenschaltungsmitteln (108) und dem Elektromotor (102), zwischengestellt ist.

6. Fahrzeug (100, 100A-100C) nach vorangehendem Anspruch, wobei der oder mindestens einer der Gleichstrom/Gleichstrom-Wandler (116, 118) wie ein Frequenzumrichter arbeitet, wobei das Fahrzeug (100, 100A-100C) ebenfalls Steuermittel (119) des Umrichters umfasst, welche den Umrichter in Abhängigkeit von mindestens einem Parameter der folgenden Liste steuern:
- Parametern, die mit der Funktion des ersten und/oder des zweiten Energiespeichermodul (104, 106), insbesondere dem Ladezustand, verbunden sind,
- Parametern, die mit der Funktion des Fahrzeugs (100, 100A-100C), insbesondere der Geschwindigkeit des Fahrzeugs (100, 100A-100C) oder dem Ladezustand des Elektromotors (102), verbunden sind,
- Signal von einer Nutzerschnittstelle.

7. Fahrzeug (100, 100A-100C) nach vorangehendem Anspruch, wobei die Steuermittel (119) des Umrichters imstande sind, mit einem oder mehreren der folgenden Elemente zu kommunizieren:
- den Überwachungsmitteln des ersten Speichermoduls (122),
- den Überwachungsmitteln des zweiten Speichermoduls (124),
- den Überwachungsmitteln der anderen Organe des Fahrzeugs (100, 100A-100C), insbesondere dem CAN-Bus des Fahrzeugs (120).

8. Fahrzeug (100, 100A-100C) nach einem der vorangehenden Ansprüche, wobei die Speichermittel (104, 106) in einem Dachraum des Fahrzeugs (100, 100A-100C) angeordnet sind, der vorzugsweise auf dem Fahrzeug (100, 100A-100C) angebracht ist.

9. Transporteinrichtung (10), umfassend:
- mindestens ein Fahrzeug (100, 100A-100C) nach einem der vorangehenden Ansprüche, umfassend Verbindungsmittel (110), bezeichnet als erste Verbindungsmittel (110), des ersten Speichermoduls mit Superkondensator (104) mit einer externen Quelle in Bezug auf das Fahrzeug (100, 100A-100C), und
- mindestens eine Ladestation (200, 200A-200D) des Fahrzeugs (100, 100A-100C), die auf einem Weg des Fahrzeugs (100, 100A-100C) angeordnet ist und in deren Nachbarschaft das Fahrzeug (100, 100A-100C) bestimmt ist zu stoppen, wobei die Ladestation (200, 200A-200D) mit mindestens einer Energiequelle (300, 400) verbunden ist und Verbindungsmittel (202) aufweist, bezeichnet als dritte Verbindungsmittel (202), die zu den ersten Verbindungsmitteln des Fahrzeugs (110) komplementär sind, die imstande sind, die oder eine der Energiequellen (300, 400) mit dem ersten Speichermodul mit Superkondensator (104) elektrisch zu verbinden.

10. Einrichtung (10) nach vorangehendem Anspruch, wobei die ersten Verbindungsmittel (110) des Fahrzeugs (100, 100A-100C) einen insbesondere teleskopischen Arm umfassen, der imstande ist, sich vorspringend vom Fahrzeug (100, 100A-100C) zu erstrecken und einen Verbinder an seinem Ende umfasst, wobei die dritten Verbindungsmittel (202) einen komplementären Verbinder zu dem umfassen, der sich am Ende des Arms befindet und im Bereich der Ladestation (200, 200A-200D) derart angeordnet ist, dass die zwei Verbinder des Fahrzeugs (100, 100A-100C) und der Ladestation (200, 200A-200D) in Kontakt treten können.

11. Einrichtung (10) nach einem der Ansprüche 9 und 10, wobei die oder mindestens eine der Ladestationen (200, 200A-200D) Energiespeichermittel (206, 208) umfasst, umfassend mindestens ein drittes Speichermodul (206), umfassend einen oder mehrere Superkondensatoren, das zum einen mit der oder mindestens einer der Energiequellen (300, 400) und zum anderen mit den dritten Verbindungsmitteln (202) elektrisch verbunden ist.

12. Einrichtung (10) nach einem der Ansprüche 9 bis 11, wobei die oder mindestens eine der Ladestationen (200, 200A-200D) mindestens einen Gleichstrom/Gleichstrom-Wandler (216) umfasst, der zwischen dem dritten Speichermodul (206) und den dritten Verbindungsmitteln (202) zwischengestellt ist.

13. Einrichtung (10) nach einem der Ansprüche 9 bis 12, wobei die oder mindestens eine der Ladestationen (200, 200A-200D) mit einem städtischen Verteilernetz (300) elektrisch verbunden ist, das die oder eine der Energiequellen (300 400) bildet und einen Wechselstrom/Gleichstrom-Wandler (210) umfasst, der zwischen dem städtischen Verteilernetz (300) und den dritten Verbindungsmitteln (202), insbesondere zwischen dem städtischen Verteilernetz (300) und dem dritten Speichermodul (206), zwischengestellt ist.

14. Einrichtung (10) nach einem der Ansprüche 9 bis 13, wobei die oder mindestens eine der Ladestationen (200, 200A-200D) vierte Verbindungsmittel (204) umfasst, die sich von den dritten Verbindungsmitteln (202) unterscheiden und zu den zweiten Verbindungsmitteln (112) des Fahrzeugs (100, 100A-100C) komplementär sind, die mit dem zweiten Speichermodul mit Batterie (106) des Fahrzeugs (100, 100A-100C) verbunden sind, die imstande sind, die oder eine der Energiequellen (300, 400) mit dem zweiten Speichermodul mit Batterie (106) zu verbinden.

15. Einrichtung (10) nach einem der Ansprüche 9 bis 14, wobei die oder mindestens eine der Ladestationen (200, 200A-200D) mit einer Quelle autonomer Energie (400) verbunden ist, die insbesondere von Solarzellengeneratoren erzeugt wird.

16. Einrichtung (10) nach vorangehendem Anspruch, wobei die Ladestation(en) (200, 200A-200C) ebenfalls ein viertes Speichermodul (208) umfassen, aufweisend mindestens eine Batterie, die mit der Quelle autonomer Energie (400) elektrisch verbunden ist, um die von dieser Quelle kommende Energie zu speichern und vorzugsweise mit den vierten Verbindungsmitteln der Station (204) verbunden ist.

## Claims

1. An electric vehicle (100, 100A-100C), comprising an electric motor (102) and energy storage means (104, 106) onboard, electrically connected to the electric motor (102), in order to supply electric energy to said electric motor, wherein the energy storage means comprise:
- first energy storage module (104) comprising at least one supercapacitor, on the one nand,
- a second energy storage module (106) comprising at least one battery, on the other hand,
the first and second energy storage modules (104, 106) being laid out on parallel electrical branches, the vehicle (100, 100A-100C) comprising interconnection means (108) positioned between the energy storage means (104, 106) and the electric motor (102), **characterized in that** the interconnection means (108) are controlled as a function of the charge level of the first energy storage module (104) with supercapacitor and comprise a switch configured for having a first position, in which the first energy storage module (104) with supercapacitor is connected to the electric motor (102) and a second position, in which second energy storage module (106) with battery is connected to the electric motor (102),
the switch being configured not to allow to connect both the first energy storage module (104) with supercapacitor and the second energy storage module (106) with battery to the electric motor (102),
the switch having a third position, so-called stop position, in which neither the first energy storage module (104) with supercapacitor nor the second energy storage module (106) with battery are connected to the electric motor (102), this third position being reserved to a mode in which the vehicle (100, 100A-100C) is at a standstill, its motor not being powered when the switch is placed in this position,
the vehicle (100, 100A-100C) comprising :
- first connection means (110), comprising a connector and capable of connecting the first energy storage module (104) with supercapacitor to third mating connection means (202), located outside the vehicle (100, 100A-100C),
- second connection means (112), comprising a connector and which are distinct from the first connection means (110) and which are capable of connecting the second storage module (106) with battery to fourth mating connection means (204), which are located outside the vehicle (100, 100A-100C) and which are distinct from the third mating connection means (202).

2. The vehicle (100, 100A-100C) according to preceding claim, comprising at least a DC/DC (116) and/or AC/DC converter (114) interposed between the first and/or second connection means (112) and the corresponding storage module (104, 106).

3. The vehicle (100, 100A-100C) according to any one of the preceding claims, comprising means (109) for controlling the interconnection means (108), capable of controlling the interconnection means (108) according to one or several of the following parameters:
- parameters related to the operation of the first and/or the second energy storage module (104, 106), notably to the charge level,
- parameters related to the operation of the vehicle (100, 100A-100C), notably the speed of the vehicle or the state of the electric motor (102),
- a signal from a user interface.

4. The vehicle (100, 100A-100C) according to the preceding claim, wherein the means (109) for controlling the interconnection means (108) are able to communicate with one or several of the following elements:
- means for monitoring the first storage module (122),
- means for monitoring the second storage module (124),
- means for monitoring the other units of the vehicle (100, 100A-100C), notably the CAN bus of the vehicle (120).

5. The vehicle (100, 100A-100C) according to any one of the preceding claims, comprising another DC/DC converter (118), interposed between the electric motor (102) and at least one of the energy storage modules (104, 106), notably between the interconnection means (108) and the electric motor (102).

6. The vehicle (100, 100A-100C) according to the preceding claim, wherein the or at least one of the DC/DC converters (118) operates as a variable speed drive, the vehicle (100, 100A-100C) also comprising means (119) for controlling the variable speed drive, controlling the variable speed drive according to at least one parameter from the following list:
- parameters related to the operation of the first and/or the second energy storage module (104, 106), notably to the charge level,
- parameters related to the operation of the vehicle (100, 100A-100C), notably the speed of the vehicle (100, 100A-100C) or the state of the electric motor (102),
- a signal from a user interface.

7. The vehicle (100, 100A-100C) according to the preceding claim, wherein the means (119) for controlling the variable speed drive are able to communicate with one or several of the following elements:
- the means for monitoring the first storage module (122),
- the means for monitoring the second storage module (124),
- the means for monitoring the other units of the vehicle (100, 100A-100C), notably the CAN bus of the vehicle (120).

8. The vehicle (100, 100A-100C) according to any one of the preceding claims, wherein the storage means (104, 106) are positioned in a roof box of the vehicle (100, 100A-100C), preferably added onto the vehicle (100, 100A-100C).

9. A transport facility (10), comprising:
- at least one vehicle (100, 100A-100C) according to any one of the preceding claims, comprising connection means, so-called first connection means (110), for connection of the first storage module (104) with supercapacitor to a source outside the vehicle (100, 100A-100C), and
- at least one recharching station (200; 200A-200D) for recharging the vehicle (100, 100A-100C) positioned on a path of the vehicle (100, 100A-100C) and in the vicinity of which the vehicle (100, 100A-100C) is intended to stop,
- the recharging station (200, 200A-200D) being connected to at least one energy source (300, 400) and including connection means (202), so-called third connection means (202) mating the first connection means of the vehicle (110), and capable of electrically connecting the or one of the energy sources (300, 400) to the first storage module (104) with spercapacitor.

10. The facility (10) according to the preceding claim, wherein the first connection means (110) of the vehicle (100, 100A-100C) comprise an arm, notably telescopic and able to extend by protruding from the vehicle (100, 100A-100C) and comprising a connector at its end, the third connection means (202) comprising a connector mating the one located at the end of the arm and positioned at the recharging station (200, 200A-200D) so that both connectors of the vehicle (100, 100A-100C) and of the recharging station (200, 200A-200D) may come into contact.

11. The facility (10) according to any one of claims 9 and 10, wherein the or at least one of the recharging stations (200, 200A-200D) comprises energy storage means (206, 208) comprising at least one third storage module (206) comprising one or several supercapacitors electrically connected to the or at least one of the energy sources (300, 400) on the one hand and to the third connection means (202) on the other hand.

12. The facility (10) according to any one of claims 9 to 11, wherein the or at least one of the recharging stations (200, 200A-200D) comprises at least one DC/DC converter (216) interposed between the third storage module (206) and the third connection means (202).

13. The facility (10) according to any one of claims 9 to 12, wherein the or at least one of the recharging stations (200, 200A-200D) is electrically connected to an urban electricity distribution network (300) forming the or one of the energy sources, and comprises an AC/DC converter (210) interposed between the urban electricity distribution network and the third connection means (202), notably between the urban electricity distribution network and the third storage module (206).

14. The facility (10) according to any one of claims 9 to 13, wherein the or at least one of the recharging stations (200, 200A-200D) comprises fourth connection means (204), distinct from the third connection means (202) and mating the second connection means (112) of the vehicle (100, 100A-100C) connected to the second storage module (106) with battery of the vehicle (100, 100A-100C), capable of connecting the or one of the energy sources (300, 400) to the second storage module (106) with battery.

15. The facility (10) according to any one of claims 9 to 14, wherein the or at least one of the recharging stations (200, 200A-200D) is connected to an autonomous energy source (400) notably produced by photovoltaic panels.

16. The facility (10) according to the preceding claim, wherein said recharging station(s) (200, 200A-200D) also comprise(s) a fourth storage module (208) including at least one battery electrically connected to the autonomous energy source (400) in order to store the energy from this source and preferably connected to the fourth connection means of the station (204).
